# EUROPEAN PATENT SPECIFICATION

(11) **EP 1 404 533 B1**
(45) Date of publication and mention of the grant of the patent: **04.07.2007**
(21) Application number: 02745165.7
(22) Date of filing: 22.05.2002
(51) Int. Cl.: B44D 3/12, B65D 25/14, C09D 175/02, C08G 18/30, C08J 7/04, B05D 7/24, B05D 3/10

(54) **A CONTAINER OR A LID OF THERMOPLASTIC MATERIAL AND A METHOD FOR TREATING THEM**
BEHÄLTER ODER DECKEL AUS THERMOPLASTISCHEM MATERIAL UND VERFAHREN ZU SEINER BEHANDLUNG
RECIPIENT OU COUVERCLE EN MATERIAU THERMOPLASTIQUE ET SON PROCEDE DE TRAITEMENT

(30) Priority: 25.05.2001 SE 0101857; 25.05.2001 DK 200100846
(43) Date of publication of application: 07.04.2004
(73) Proprietor: Superfos Packaging A/S, 2950 Vedbæk (DK)
(72) Inventor: BOYSEN, Poul, DK-4390 Vipperoed (DK); KIILERICH, Ole, DK-8000 Aarhus C (DK)
(74) Representative: Wetke, Ellen
(86) International application number: PCT/DK2002/000342
(87) International publication number: WO 2002/094582

(56) References cited:
- EP-A- 0 551 819
- WO-A-00/27725
- WO-A-01/32442
- DATABASE WPI Section Ch, Week 198818 Derwent Publications Ltd., London, GB; Class A17, AN 1988-122584 XP002194663 & JP 63 065982 A (NIPPON PAINT CO LTD), 24 March 1988 (1988-03-24)

## Description

A container or a lid of thermoplastic material and a method for treatment of thermoplastic material constituting a container or a lid

The present invention relates to a container and a lid of thermoplastic material and use of the container and lid. The present invention also relates to a method for treatment of thermoplastic material constituting a container or a lid and use of the method.

Containers and lids, in particular containers and lids for paints based on water are normally produced by spray casting thermoplastic material into a desired shape at elevated temperatures. The thermoplastic material, which normally is used for such containers are polyethylenes and polypropylenes and similar thermoplastic material. The thermoplastic materials are selected due to their low cost and easy handling in the production line and moreover because they are acceptable with respect to protection of the environment.

When containers and lids of those thermoplastic materials are used for paints, preferably paints based on water, the liquid paint will cover the surfaces on the lid and the walls of the container which are in contact with the liquid paint. When the container is opened, by removing the lid, the water in the liquid paint will start evaporating and leave a layer of dry paint on the covered surfaces. As the liquid paint is used, the level of paint in the container will sink and more of the surface on the wall of the container will be left with a thin layer of paint which will become dry paint.

The dry paint on the surfaces of a container and a lid made from thermoplastic material has a strong tendency to peel off the surface. The effect of the dry paint peeling off the surface is in many situations highly undesired.

When a painter is using paint from such a container he will have the container left open for several hours during the working day. This will of course cause surfaces with a layer of dry paint in the container and on the lid as the water evaporates from the paint on these surfaces. If the painter does not use all the paint in the container, he will put on the lid to save the paint for the next working day. When the lid is removed from the container, the hardened paint tends to peel off and flakes of dry paint will drop into the liquid paint causing trouble when the liquid paint is used on a paint roller or in a spray gun.

The above problem with the dry paint that peel off has so far been solved either by the painter picking up the flakes of dry paint before using the paint or by using containers and lids made from metal. The first solution is inconvenient for the painter. The second solution using containers and lids made from metal is however a rather expensive solution and not the best with regard to the environment. Consequently there is a need for containers and lids where the problem described above is avoided and which containers and lids can be produced in a cost-effective way and moreover are acceptable with regard to the environment.

One object of the present invention is to provide an alternative solution to the problem stated above.

A second object of the present invention is to provide containers and lids of thermoplastic material having surfaces from which the tendency of paint to peel of is reduced significantly.

These objects and other objects are achieved by the invention as defined in the claims.

The invention provides containers and lids with excellent properties, in particular for use as containers and lids for liquid paint based on water. By use of the containers and lid for liquid paint it is avoided that dry paint peels off the surfaces and fall into the liquid paint as dry flakes. In the known containers and lids of thermoplastic material these flakes causes trouble in the painting tool. Thereby the container and lid according to the invention gives a good anti-peeling effect. Anti-peeling properties can be defined as a good ability to avoid that dry paint peels off the surface and substantially no dry paint peels off.

In one aspect the invention relates to a container of thermoplastic material. Preferably the container has a bucket-form including a bottom-part with a lower and upper surface and a wall-part with an external and an inner surface wherein at least a part of the inner surface of said wall-part is coated with a coating material providing a coating comprising isocyanate reacted with water.

By the term isocyanate reacted with water is understood that it is the reaction product of isocyanate hardened with water. The reaction product may of course contain traces of optionally catalysts and other additives.

The coating has properties which prevent liquid paint and other liquid from peeling off the coated surface when dried. This problem is well known in connection with containers of thermoplastic material like polyethylene and polypropylene. It is preferred that the container according to the invention is manufactured from polypropylene and having substantially a bucket-form which gives the best properties with regard to strength, material consumption and storage of liquid material. The container is preferably adapted to be closed with a lid to obtain a substantially airtight sealing.

In a preferred embodiment of the container according to the invention the coating comprising isocyanate reacted with water has a thickness between 5 and 100 µm, and more preferred between 10 and 70 µm. Such thickness of the coating gives the optimal anti-peeling properties and consumption of isocyanate.

It is preferred that the container has a coating comprising isocyanate reacted with water which is regularly distributed over the coated surface to provide a uniform layer on the coated surface. Moreover, in order to achieve the best anti-peeling properties, it is preferred that the amount of non-coated areas on the coated surface is less than 3 % of the totally coated area which will provide the best properties with regard to anti-peeling.

In order to achieve containers with optimal anti-peeling properties it is preferred that the coating comprising isocyanate reacted with water comprises from 6x10⁻⁴ g/cm² to 0,125 g/cm² isocyanate.

Moreover to obtain a container with good properties for a desired use as container for liquid paint it is preferred that the bottom-part and the wall-part of the container have a circular, oval, quadrangular or rectangular shaped cross section. These shapes are preferred for specific uses of paint, for instance it may be preferred that the container has quadrangular or rectangular shape when the paint is to be used on rollers.

The containers can of course be manufactured in any desired size, e.g. to contain 2½, 5 or 10 litres of liquid.

The invention also relates to the use of a container as previously described, and optionally in combination with a lid. The invention provides a closed container system for storing and transporting liquid paint having good anti-peeling properties.

In a second aspect the invention relates to a lid of thermoplastic material. The lid is substantially disc-shaped with an upper and a lower side and optionally with a sealing device along the rim wherein at least a part of the lower side of the lid is coated with a coating material providing a coating comprising isocyanate reacted with water. The sealing device may be any known device, e.g snap-lock or thread.

To obtain the best anti-peeling properties of the lid according to the invention it is preferred that the coating comprising isocyanate reacted with water has a thickness between 5 and 100 µm, and more preferred between 10 and 70 µm.

Moreover in a preferred embodiment of the lid the coating comprising isocyanate reacted with water is regularly distributed over the coated surface and preferably the amount of non-coated areas on the coated surface is less than 3 % of the total coated area. Hereby it is possible to achieve the best anti-peeling properties.

Preferably the coating comprising isocyanate reacted with water comprises from 6x10⁻⁴ g/cm² to 0,125 g/cm² of isocyanate.

In order to be adapted to containers of various shapes it is preferred that the lid can be manufactured in various shapes. Preferably the lid has a circular, oval, quadrangular or rectangular shaped cross section.

In a preferred embodiment the lid according to the invention is adapted to be placed over an opening of a container, preferably with the lower side facing the internal part of the container, and providing a substantially airtight sealing of said container. In this embodiment it is preferred that the internal surfaces of the lid on at least the wall-side of the container has a coating comprising isocyanate reacted with water.

The invention also relates to the use of a lid according to the invention in combination with a container for storing and transporting liquid paint.

Moreover the invention relates to a container system comprising a container having at least one surface comprising isocyanate reacted with water and a lid having at least one surface comprising isocyanate reacted with water and where the container and the lid are adapted to provide a substantially airtight sealing of the container system.

In a further aspect of the invention, the invention relates to a method for treatment of thermoplastic material constituting a container or a lid and the treatment comprises the steps of:
i) exposing at least one surface of the container or the lid to a corona treatment; and
ii) applying a layer of isocyanate to the corona treated surface; and
iii) applying water and optionally a catalyst to the surface; and
iv) hardening the layer of isocyanate.

The corona treatment is preferably a conventional corona treatment, optionally a flame or plasma treatment can be used. Preferred isocyanates are MDI or TDI or similar types of isocyanates with a relatively low vapour pressure.

Preferably the isocyanate is applied to the corona treated surface by one or more rollers, spray nozzles, brushes or sponges or similar applicators, which can apply a uniform layer of isocyanate to the corona treated surface.

According to the method it is preferred that the isocyanate is applied in an amount to provide a layer of isocyanate with a thickness between 5 and 100 µm and even more preferred a thickness between 10 and 70 µm on the treated surface. By this embodiment of the method good anti-peeling properties are obtained in the container or the lid.

In a preferred embodiment of the method according to the invention the isocyanate is applied to obtain a layer of regularly distributed isocyanate on the corona treated surface, and preferably non-coated areas on the treated surface constitute less than 3 % of the total area of the treated surface. Hereby optimal anti-peeling properties are achieved.

Preferably the isocyanate is applied at a temperature of less than 60°C, and more preferred at a temperature of less than 50°C. This is to avoid too high or undesired evaporation of isocyanate. Preferably the temperature is higher than 10°C as isocyanate tends to crystallize below this temperature.

In a preferred embodiment of the method according to the invention the isocyanate is applied in an amount of approximately 6x10⁻⁴ g/cm- to 0,125 g/cm². The application of such an amount secures that a stable and tight coating can be achieved.

According to the method it is preferred to apply a catalyst to the isocyante together with the water. The catalyst will decrease the time needed to harden the isocyanate and form isocyanate reacted with water. The catalyst is preferably selected from the group consisting of amines, tin compounds or alcohols.

To achieve the best results using the method according to the invention it is preferred that step ii) in the method follows immediately after step i). Preferably step i) is followed by step ii) within 5 to 360 second, more preferred within 10 to 120 seconds. Hereby the best possible adherence between the thermoplastic material and the coating comprising isocyanate reacted with water is achieved.

The invention also relates to a container or a lid obtained by the method disclosed above.

Furthermore the invention relates to the use of the method disclosed above for manufacturing containers and/or lids for storage and transport of liquid paint, in particular paint based on water.

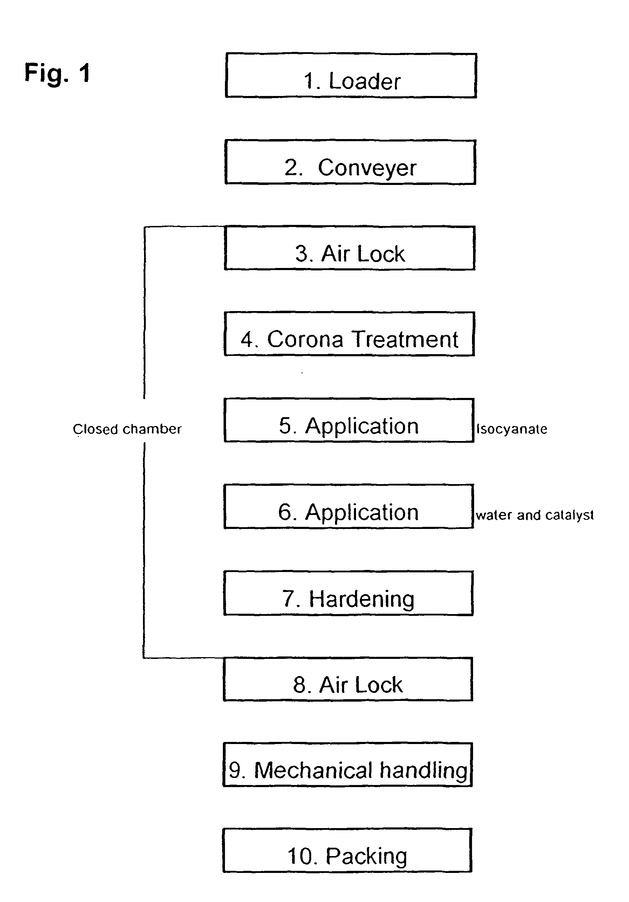

The invention will hereafter be described with reference to an example an a drawing wherein
- Fig. 1: shows a flowsheet of the method according to the invention.

### Example

With reference to fig. 1 the containers which are to be treated to obtain a coating of isocyanate reacted with water are brought to a loader 1 which places the containers on a conveyer 2.

The containers have substantially a bucket-shape and are manufactured from polypropylene. The conveyer 2 transports the containers to a closed chamber via an air lock 3. The closed chamber is necessary with respect to the environment. In the closed chamber the containers are exposed to a corona treatment 4 which is followed immediately by an application of isocyanate 5. The isocyanate is MDI and is applied with a spray nozzle. Next step 6 is application of water and a tertiary amine as catalyst. Hereafter the isocyanate is allowed to harden in a hardening zone 7.

After the treatment the containers leave the closed chamber via a second air lock 8 for mechanical handling, e.g. stacking and packing 10.

Lids for the containers are subjected to a similar process.

## Claims

1. A paint container or a lid of thermoplastic material, said container and lid having an outer and an inner surface **characterized in that** at least a part of the inner surface of said container or lid is coated with a coating comprising the reaction product of isocyanate hardened with water.

2. A paint container or a lid according to claim 1, wherein said container has a substantially bucket-form including a bottom-part with a lower and upper surface and a wall-part with an outer and an inner surface.

3. A.paint container or a lid according to claim 1, wherein said lid is substantially disc-shaped with an upper and a lower surface and optionally comprises a sealing device along the rim.

4. A paint container or a lid according to claims 1-3, wherein said coating has a thickness between 5 and 100 µm, preferably between 10 and 70 µm.

5. A paint container or a lid according to any one of the preceding claims, wherein said coating is regularly distributed over the surface and preferably the amount of non-coated areas on the surface is less than 3 % of the total coated area.

6. A paint container or a lid according to any one of the preceding claims, wherein said coating comprises from 6x10⁻⁴ g/cm² to 0.125 g/cm² isocyanate.

7. A paint container or a lid according to any one of the preceding claims, wherein said bottom-part and wall-part of the container has a circular, oval, quadrangular or rectangular shaped cross section.

8. A paint container or a lid according to any one of the preceding claims, wherein said lid has a circular, oval, quadrangular or rectangular shaped cross section.

9. A paint container or a lid according to any one of the preceding claims, wherein said lid is adapted to be placed over an opening of a container, preferably with the lower surface facing the inner part of the container, and to provide a substantially airtight sealing of said container.

10. Use of a paint container and a lid according to claims 1 to 9 for storing and transporting liquid paint.

11. A container system comprising a container and a lid according to claims 1 to 9, wherein the container and the lid are adapted to provide a substantially airtight sealing of said container.

12. A method for treatment of thermoplastic material constituting a paint container or a lid having an outer and an inner surface comprising the steps of:
i) applying a layer of isocyanate to the inner surface of the container or lid,
ii) applying water and optionally a catalyst to the inner surface; and
iii) hardening the layer of isocyanate.

13. A method according to claim 12, wherein said method further comprises a step of exposing at least one surface of said paint container or lid to a corona treatment before applying a layer of isocyanate.

14. A method according to claims 12 or 13, wherein the isocyanate is applied to the inner surface by one or more rollers, spray nozzles, brushes or sponges.

15. A method according to any one of claims 12 to 14, wherein isocyanate is applied in an amount to provide a layer of isocyanate with a thickness between 5 and 100 µm, preferably between 10 and 70 µm.

16. A method according to any one of claims 12 to 15, wherein isocyanate is applied to obtain a layer of regularly distributed isocyanate on the surface, preferably non-coated areas on the surface constitute less than 3 % of the total area of the surface.

17. A method according to any one of claims 12 to 16, wherein isocyanate is applied at a temperature of less than 60°C, preferably less than 50°C.

18. A method according to any one of claims 12 to 17, wherein isocyanate is applied in an amount of 6x10⁻⁴ g/cm² to 0.125 g/cm².

19. A method according to claim 12, wherein the catalyst is selected from the group consisting of amines, tin compounds or alcohols.

20. A method according to claim 12, wherein step ii) follows immediately after step i).

21. A paint container or a lid obtained by the method according to any one of claims 12 to 20.

22. Use of the method according to claims 12 to 20 for manufacturing paint containers and/or lids for storage and transport of liquid paint.

## Patentansprüche

1. Farbbehälter oder ein Deckel aus thermoplastischem Material, wobei der Behälter und der Deckel eine äußere und eine innere Oberfläche aufweisen, **gekennzeichnet dadurch, dass** mindestens ein Teil der inneren Oberfläche des Behälters oder Deckels mit einer Beschichtung, die das Reaktionsprodukt von mit Wasser gehärtetem Isocyanat enthält, beschichtet ist.

2. Farbbehälter oder ein Deckel nach Anspruch 1, wobei der Behälter im Wesentlichen eine Eimerform hat, enthaltend ein Bodenteil mit einer unteren und oberen Oberfläche und ein Wandteil mit einer äußeren und inneren Oberfläche.

3. Farbbehälter oder ein Deckel nach Anspruch 1, wobei der Deckel im Wesentlichen scheibenförmig ist, mit einer oberen und unteren Oberfläche, und enthält wahlweise eine Abdichtvorrichtung entlang des Rands.

4. Farbbehälter oder ein Deckel nach Ansprüchen 1-3, wobei die Beschichtung eine Dicke zwischen 5 und 100 µm, vorzugsweise zwischen 10 und 70 µm hat.

5. Farbbehälter oder ein Deckel nach einem der vorangegangenen Ansprüche, wobei die Beschichtung gleichmäßig über die Oberfläche verteilt ist und die Menge an nicht-beschichteten Bereichen auf der Oberfläche vorzugsweise kleiner als 3% des gesamten beschichteten Bereichs ist.

6. Farbbehälter oder ein Deckel nach einem der vorangegangenen Ansprüche, wobei die Beschichtung Isocyanat von 6x10⁻⁴ g/cm² bis 0,125 g/cm² enthält.

7. Farbbehälter oder ein Deckel nach einem der vorangegangenen Ansprüche, wobei das Bodenteil und Wandteil des Behälters einen kreisförmig, oval, viereckig oder rechteckig geformten Querschnitt hat.

8. Farbbehälter oder ein Deckel nach einem der vorangegangenen Ansprüche, wobei der Deckel einen kreisförmig, oval, viereckig oder rechteckig geformten Querschnitt hat.

9. Farbbehälter oder ein Deckel nach einem der vorangegangenen Ansprüche, wobei der Deckel geeignet ist, über eine Öffnung eines Behälters gesetzt zu werden, vorzugsweise mit der unteren Oberfläche in Richtung des inneren Teils des Behälters, und ein im Wesentlichen luftundurchlässiges Abdichten des Behälters bereitzustellen.

10. Verwendung eines Farbbehälters und eines Deckels nach Ansprüchen 1 bis 9 zur Lagerung und zum Transport von flüssiger Farbe.

11. Behältersystem, enthaltend einen Behälter und einen Deckel nach Ansprüchen 1 bis 9, wobei der Behälter und der Deckel geeignet sind, ein im Wesentlichen luftundurchlässiges Abdichten des Behälters bereitzustellen.

12. Verfahren zur Behandlung von thermoplastischem Material, das einen Farbbehälter oder einen Deckel bildet, mit einer äußeren und inneren Oberfläche, die Schritte enthaltend:
i) Aufbringen einer Isocyanatschicht auf die innere Oberfläche des Behälters oder Deckels,
ii) Aufbringen von Wasser und wahlweise eines Katalysators auf die innere Oberfläche; und
iii) Härten der Isocyanatschicht.

13. Verfahren nach Anspruch 12, wobei das Verfahren vor Aufbringen einer Isocyanatschicht des Weiteren einen Schritt des Aussetzens von mindestens einer Oberfläche des Farbbehälters oder Deckels einer Koronabehandlung enthält.

14. Verfahren nach Ansprüchen 12 oder 13, wobei das Isocyanat auf die innere Oberfläche durch eine oder mehr Walzen, Sprühdüsen, Pinsel oder Schwämme aufgebracht wird.

15. Verfahren nach einem der Ansprüche 12 bis 14, wobei Isocyanat in einer Menge aufgebracht wird, um eine Isocyanatschicht mit einer Dicke zwischen 5 und 100 µm, vorzugsweise zwischen 10 und 70 µm bereitzustellen.

16. Verfahren nach einem der Ansprüche 12 bis 15, wobei Isocyanat aufgebracht wird, um auf der Oberfläche eine Schicht von gleichmäßig verteiltem Isocyanat zu erhalten, vorzugsweise machen nichtbeschichtete Bereiche auf der Oberfläche weniger als 3% des gesamten Bereichs der Oberfläche aus.

17. Verfahren nach einem der Ansprüche 12 bis 16, wobei Isocyanat bei einer Temperatur von weniger als 60°C, vorzugsweise weniger als 50°C aufgebracht wird.

18. Verfahren nach einem der Ansprüche 12 bis 17, wobei Isocyanat in einer Menge von 6x10⁻⁴ g/cm² bis 0,125 g/cm² aufgebracht wird.

19. Verfahren nach Anspruch 12, wobei der Katalysator aus der Gruppe bestehend aus Aminen, Zinnverbindungen oder Alkoholen ausgesucht ist.

20. Verfahren nach Anspruch 12, wobei Schritt ii) sofort nach Schritt i) folgt.

21. Farbbehälter oder Deckel, erhalten durch das Verfahren nach einem der Ansprüche 12 bis 20.

22. Verwendung des Verfahrens nach Ansprüchen 12 bis 20 zur Herstellung von Farbbehältern und/oder Deckeln zur Lagerung und zum Transport von flüssiger Farbe.

## Revendications

1. Récipient de peinture ou couvercle en matériau thermoplastique, lesdits récipient et couvercle ayant une surface externe et une surface interne **caractérisées en ce qu'**au moins une partie de la surface interne dudit récipient ou couvercle est recouverte d'un revêtement comprenant le produit de la réaction d'isocyanate durci avec de l'eau.

2. Récipient de peinture ou couvercle selon la revendication 1, dans lequel ledit récipient a essentiellement une forme de seau comprenant une partie de fond avec une surface inférieure et une surface supérieure et une partie de paroi avec une surface externe et une surface interne.

3. Récipient de peinture ou couvercle selon la revendication 1, dans lequel ledit couvercle a essentiellement une forme de disque avec une surface supérieure et une surface inférieure et comprend éventuellement un dispositif d'étanchéité le long du bord.

4. Récipient de peinture ou couvercle selon les revendications 1 à 3, dans lequel ledit revêtement a une épaisseur comprise entre 5 et 100 µm, de préférence entre 10 et 70 µm.

5. Récipient de peinture ou couvercle selon l'une quelconque des revendications précédentes, dans lequel ledit revêtement est réparti de manière régulière sur la surface et la quantité des zones non recouvertes sur la surface représentent de préférence moins de 3% de la zone recouverte totale.

6. Récipient de peinture ou couvercle selon l'une quelconque des revendications précédentes, dans lequel ledit revêtement comprend entre 6x10⁻⁴ g/cm² et 0,125 g/cm² d'isocyanate.

7. Récipient de peinture ou couvercle selon l'une quelconque des revendications précédentes, dans lequel lesdites partie de fond et partie de paroi du récipient ont une coupe transversale de forme circulaire, ovale, quadrangulaire ou rectangulaire.

8. Récipient de peinture ou couvercle selon l'une quelconque des revendications précédentes, dans lequel ledit couvercle a une coupe transversale de forme circulaire, ovale, quadrangulaire ou rectangulaire.

9. Récipient de peinture ou couvercle selon l'une quelconque des revendications précédentes, dans lequel ledit couvercle est adapté de manière à être placé sur une ouverture d'un récipient, sa surface inférieure faisant de préférence face à la partie interne du récipient, et de manière à fournir au dit récipient une fermeture essentiellement étanche à l'air.

10. Utilisation d'un récipient de peinture et d'un couvercle selon les revendications 1 à 9 pour stocker et transporter de la peinture liquide.

11. Système de récipient comprenant un récipient et un couvercle selon les revendications 1 à 9, dans lequel le récipient et le couvercle sont adaptés de manière à fournir au dit récipient une fermeture essentiellement étanche à l'air.

12. Procédé de traitement de matériau thermoplastique constituant un récipient de peinture ou un couvercle ayant une surface externe et une surface interne comprenant les étapes consistant à :
i) appliquer une couche d'isocyanate sur la surface interne du récipient ou couvercle,
ii) appliquer de l'eau et éventuellement un catalyseur sur la surface interne ; et
iii) durcir la couche d'isocyanate.

13. Procédé selon la revendication 12, dans lequel ledit procédé comprend en outre une étape d'exposition d'au moins une surface dudit récipient de peinture ou couvercle à un traitement Corona avant l'application d'une couche d'isocyanate.

14. Procédé selon les revendications 12 ou 13, dans lequel l'isocyanate est appliqué sur la surface interne par un(e) ou plusieurs rouleaux, pulvérisateurs, brosses ou éponges.

15. Procédé selon l'une quelconque des revendications 12 à 14, dans lequel l'isocyanate est appliquée en une quantité de manière à fournir une couche d'isocyanate ayant une épaisseur comprise entre 5 et 100 µm, de préférence entre 10 et 70 µm.

16. Procédé selon l'une quelconque des revendications 12 à 15, dans lequel l'isocyanate est appliqué de manière à obtenir une couche d'isocyanate répartie de manière régulière sur la surface, les zones non recouvertes sur la surface constituant de préférence moins de 3% de la surface totale.

17. Procédé selon l'une quelconque des revendications 12 à 16, dans lequel l'isocyanate est appliqué à une température inférieure à 60°C, de préférence inférieure à 50°C.

18. Procédé selon l'une quelconque des revendications 12 à 17, dans lequel l'isocyanate est appliqué dans une quantité comprise entre 6x10⁻⁴ g/cm² et 0,125 g/cm².

19. Procédé selon la revendication 12, dans lequel le catalyseur est choisi parmi un groupe constitué d'amines, de composés d'étain et d'alcools.

20. Procédé selon la revendication 12, dans lequel l'étape ii) est réalisée immédiatement après l'étape i).

21. Récipient de peinture ou couvercle obtenu par le procédé selon l'une quelconque des revendications 12 à 20.

22. Utilisation du procédé selon les revendications 12 à 20 pour fabriquer des récipients de peinture et/ou couvercles pour le stockage et le transport de peinture liquide.
